# EUROPÄISCHE PATENTSCHRIFT

(11) **EP 1 893 477 B1**
(45) Veröffentlichungstag und Bekanntmachung des Hinweises auf die Patenterteilung: **06.06.2012**
(21) Anmeldenummer: 06754395.9
(22) Anmeldetag: 16.06.2006
(51) Int. Cl.: B63H 9/02, B63H 1/26

(54) **SCHIFF**
SHIP
NAVIRE

(30) Priorität: 17.06.2005 DE 102005028447
(43) Veröffentlichungstag der Anmeldung: 05.03.2008
(60) Teilanmeldung: 10189747.8
(73) Patentinhaber: Wobben, Aloys, 26607 Aurich (DE)
(72) Erfinder: ROHDEN, Rolf, 26607 Aurich (DE)
(74) Vertreter: Eisenführ, Speiser & Partner
(86) Internationale Anmeldenummer: PCT/EP2006/005786
(87) Internationale Veröffentlichungsnummer: WO 2006/133950

(56) Entgegenhaltungen:
- BE-A1- 895 044
- DE-A1- 19 952 460
- US-A- 1 674 169
- US-A- 4 398 895
- "HYBRID ROTORS FOR WIND PROPULSION" MARINE ENGINEERS REVIEW, INSTITUTE OF MARINE ENGINEERS. LONDON, GB, 1. September 1991 (1991-09-01), Seiten 54-55, XP000233238 ISSN: 0047-5955
- J.A.Beverley: "Electric Propulsion Drives" In: A group of Authorities: "Marine Engineering", 1992, The Society of Naval Architects and Marine Engineers, Jersey City, NJ, USA * page 304 - page 305 *

## Beschreibung

Die vorliegende Erfindung betrifft ein Schiff, insbesondere ein Frachtschiff, mit einem Magnus-Rotor. Ein derartiges Schiff ist bereits aus "Die Segelmaschine" von Claus Dieter Wagner, Ernst Kabel Verlag GmbH, Hamburg, 1991, S. 156 bekannt. Hier wurde untersucht, ob ein Magnus-Rotor als Antrieb bzw. Hilfsantrieb für ein Frachtschiff eingesetzt werden kann.

US 4,602,584 zeigt ebenfalls ein Schiff, bei welchem eine Vielzahl von Magnus-Rotoren zum Antrieb des Schiffes eingesetzt wird. Aus der DD 243 251 A1 ist ebenfalls ein Schiff mit einem Magnus-Rotor bzw. einem Flettner-Rotor bekannt. In der DE 42 20 57 ist ebenfalls ein Schiff mit einem Magnus-Rotor gezeigt. Ferner wird auf den folgenden Stand der Technik verwiesen: US 4,398,895, die die Merkmale des Oberbegriffs des Anspruchs 1 offenbart, DE 101 02 740 A1, US 6,848,382 B1, DE 24 30 630, DE 41 01 238 A.

DE 199 52 460 A1 zeigt eine Windkraftanlage mit eine schiffsrumpfartigen Schwimmkörper und zwei Flettner-Rotoren. Der Schwimmkörper weist eine Turbine zum Umwandeln der Strömungsenergie des Wassers auf.

US 1,674,169 zeigt ein Schiff mit einem Magnus-Rotor, der von einer Energiequelle über ein Getriebe angetrieben wird.

"Marine Engineering, SNAME, written by a group of authorities" zeigt ein Schiff mit einem dieselelektrischen Antrieb zum Speisen eines Bordnetzes eines Schiffes.

US 4,602,584 zeigt ein Schiff mit einem Magnus-Rotor mit einer herkömmlichen Maschine, welche eine herkömmliche Schraube antreibt. Der Magnus-Rotor kann über die herkömmliche Maschine oder über einen separaten Antrieb angetrieben werden.

GB 2 072 112 zeigt ein Schiff mit einem Magnus-Rotor. Das Schiff weist ein Deckshaus direkt vor dem einen Megnus-Rotor auf.

GB 2 111 007 zeigt ein Schiff mit Ruder mit einer Costabirne sowie Leitschaufeln.

Der Magnus-Effekt beschreibt ein Auftreten einer Querkraft, d. h. senkrecht zur Achse und zur Anströmrichtung, bei einem Zylinder, der um seine Achse rotiert und der senkrecht zur Achse angeströmt wird. Die Strömung um den rotierenden Zylinder lässt sich als eine Überlagerung einer homogenen Strömung und eines Wirbels um den Körper auffassen. Durch die ungleichmäßige Verteilung der

Gesamtströmung ergibt sich eine unsymmetrische Druckverteilung am Zylinderumfang. Ein Schiff wird somit mit rotierenden bzw. drehenden Rotoren versehen, welche in der Windströmung eine zur wirksamen, d. h. mit der Höchstgeschwindigkeit korrigierten Windrichtung, senkrechte Kraft erzeugen, welche ähnlich wie beim Segeln zum Vortrieb des Schiffes verwendet werden kann. Die senkrecht stehenden Zylinder rotieren um ihre Achse und von der Seite anströmende Luft fließt dann aufgrund der Oberflächenreibung bevorzugt in Drehrichtung um den Zylinder. Auf der Vorderseite ist deshalb die Strömungsgeschwindigkeit größer und der statische Druck geringer, so dass das Schiff eine Kraft in Vorwärtsrichtung erhält.

Es ist Aufgabe der vorliegenden Erfindung, ein Schiff vorzusehen, welches einen geringen Kraftstoffverbrauch aufweist.

Diese Aufgabe wird durch ein Schiff gemäß Anspruch 1 gelöst.

Somit wird ein Schiff, insbesondere ein Frachtschiff vorgesehen, welches eine Vielzahl von Magnus-Rotoren aufweist. Jedem der Magnus-Rotoren ist ein individuell ansteuerbarer elektrischer Motor zum Drehen des Magnus-Rotors zugeordnet. Jedem elektrischen Motor wiederum ist ein Umrichter zugeordnet, um die Drehzahl und/oder die Drehrichtung des elektrischen Motors zu steuern.

Daher wird ein Schiff vorgesehen, welches den Magnus-Effekt zum Antrieb verwenden kann. Durch eine individuelle Ansteuerung der verschiedenen Magnus-Rotoren kann der durch die Magnus-Rotoren resultierende Vortrieb optimiert werden.

Nachfolgend werden die Ausführungsbeispiele und Vorteile der vorliegenden Erfindung unter Bezugnahme auf die beigefügten Zeichnungen näher erläutert.
- Fig. 1: zeigt eine perspektivische Ansicht eines Schiffes gemäß einem ersten Ausführungsbeispiel,
- Fig. 2: zeigt eine Seitenansicht und eine teilweise Schnittansicht des Schiffes von Fig. 1,
- Fig. 3: zeigt eine weitere perspektivische Ansicht des Schiffes von Fig.
- Fig. 4: zeigt eine schematische Darstellung der verschiedenen Ladedecks des Schiffes von Fig. 1,
- Fig. 5a: zeigt eine Schnittansicht des Schiffes von Fig. 1,
- Fig. 5b: zeigt eine weitere Schnittansicht des Schiffes von Fig. 1,
- Fig. 5c: zeigt eine Schnittansicht des Deckshauses 40 des Schiffes von Fig. 1,
- Fig. 6: zeigt ein Blockschaltbild der Steuerung des Schiffes gemäß dem ersten Ausführungsbeispiel von Fig. 1,
- Fig. 7: zeigt eine schematische Darstellung eines Erzeugungssystems für elektrische Energie,
- Fig. 8: zeigt eine Anordnung mehrerer Ruder im Heck des Schiffes,
- Fig. 9a: zeigt eine schematische Darstellung des mittleren Ruders in einer Seitenansicht,
- Fig. 9b: zeigt eine schematische Darstellung des mittleren Ruders in einer Ansicht von hinten,
- Fig. 10a: zeigt eine schematische Darstellung einer Propellerschaufel in der Ansicht von hinten,
- Fig. 10b: zeigt eine schematische Darstellung der Propellerschaufel in einer Seitenansicht,
- Fig. 10c: zeigt eine schematische Darstellung der Propellerschaufel in der Draufsicht,
- Fig. 10d: zeigt eine schematische Darstellung einer Seitenansicht einer alternativen Ausführungsform einer Propellerschaufel, und
- Fig. 10e: zeigt eine schematische Darstellung einer Draufsicht auf die alternative Propellerschaufel.

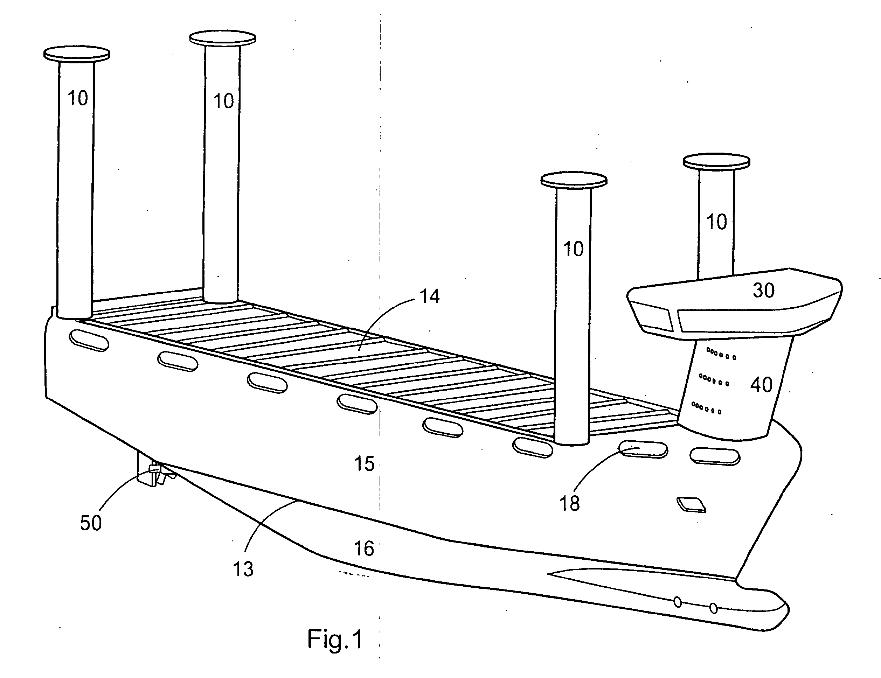

Fig. 1 zeigt eine schematische Darstellung eines Schiffes gemäß einem ersten Ausführungsbeispiel. Das Schiff weist dabei einen Rumpf bestehend aus einem Unterwasserbereich 16 und einen Überwasserbereich 15 auf. Ferner weist das Schiff vier Magnus-Rotoren bzw. Flettner-Rotoren 10 auf, welche an den vier Ecken des Rumpfes angeordnet sind. Das Schiff weist ein im Vorschiff angeordnetes Deckshaus 40 mit einer Brücke 30 auf. Das Schiff weist unter Wasser eine Schraube 50 auf. Für eine verbesserte Manövrierfähigkeit kann das Schiff ebenfalls Querstrahlruder aufweisen, wobei vorzugsweise eines am Heck und eines bis zwei Querstrahlruder am Bug vorgesehen sind. Vorzugsweise sind diese Querstrahlruder elektrisch angetrieben. Die Unterkünfte, Kombüse, Provianträume, Messen usw. sind im Deckshaus 40 angeordnet. Hierbei weist das Deckshaus 40, die Brücke 30 sowie alle Aufbauten oberhalb des Wetterdecks 14 eine aerodynamische Formgebung auf, um den Windwiderstand zu reduzieren. Dies wird insbesondere dadurch erreicht, dass scharfe Kanten und scharfkantige Anbauteile im Wesentlichen vermieden werden. Um den Windwiderstand zu minimieren, werden möglichst wenige Aufbauten vorgesehen.

Das Schiff gemäß dem ersten Ausführungsbeispiel stellt insbesondere ein Frachtschiff dar, das speziell für den Transport von Windenergieanlagen und deren Komponenten ausgelegt ist. Der Transport von Windenergieanlagen sowie deren entsprechenden Komponenten ist mit handelsüblichen Containerschiffen nur bedingt realisierbar, da die Komponenten einer Windenergieanlage einen entsprechenden Raumbedarf darstellen, welcher nicht den handelsüblichen Containermaßen entspricht, während die Massen einzelner Komponenten im Vergleich zu ihrem Raumbedarf gering sind. Beispielhaft seien hier Rotorblätter oder Gondelverkleidungen von Windenergieanlagen genannt, die überwiegend als voluminöse GFK-Strukturen mit wenigen Tonnen Gewicht ausgebildet sind.

Die vier Magnus-Rotoren 10 stellen hierbei windbetriebene Antriebe für das erfindungsgemäße Schiff dar. Es ist vorgesehen, das Schiff grundsätzlich mit den Magnus-Rotoren anzutreiben und den Propeller bzw. den Hauptantrieb nur zur Ergänzung bei nicht ausreichenden Windbedingungen zu verwenden.

Die Formgebung des Rumpfes des Schiffes ist derart ausgelegt, dass das Heck möglichst weit aus dem Wasser herausragt. Damit ist einerseits die Höhe des Hecks über dem Wasserspiegel, andererseits aber auch die Länge des Heckabschnittes gemeint, welcher ebenfalls über der Wasseroberfläche schwebt. Diese Ausgestaltung dient dazu, das Wasser frühzeitig vom Rumpf zu lösen, um eine hinter dem Schiff herlaufende Welle zu vermeiden, da diese zu einem hohen Widerstand des Rumpfes führt, weil auch diese vom Schiff hervorgerufene Welle durch die Maschinenleistung geschafft wird, welche dann aber nicht mehr zum Vortrieb zur Verfügung steht.

Der Bug des Schiffes ist über eine relativ lange Strecke scharf geschnitten. Das Unterwasserschiff ist bis zu einer Höhe von ca. 3 m über der Konstruktions-Wasserlinie 13 im Hinblick auf hydrodynamische Aspekte widerstandsoptimiert ausgestaltet.

Somit ist der Rumpf des Schiffes nicht auf eine maximale Tragfähigkeit, sondern auf einen minimalen Widerstand (aerodynamisch und hydrodynamisch) ausgelegt.

Die Aufbauten des Schiffes sind strömungsgünstig ausgestaltet. Dies wird insbesondere dadurch erreicht, dass alle Flächen als glatte Flächen ausgestaltet sind. Durch die Ausgestaltung der Brücke 30 und des Deckshauses 40 sollen vor allen Dingen Nachlaufwirbel vermieden werden, so dass die Ansteuerung der Magnus-Rotoren möglichst ungestört erfolgen kann. Die Brücke 30 mit dem Deckshaus 40 wird vorzugsweise am Bug des Schiffes angeordnet. Eine Anordnung der Aufbauten in der Mitte des Schiffes ist ebenfalls möglich, würde aber die Beladung bzw. das Löschen der Ladung unnötig behindern, weil die Aufbauten damit genau über der Mitte des Laderaumes angeordnet wären.

Alternativ dazu kann das Deckshaus 40 sowie die Brücke 30 am Heck des Schiffes angeordnet werden, dies würde sich jedoch dahingehend als nachteilig erweisen, dass die Magnus-Rotoren eine einwandfreie Sicht nach vorne beeinträchtigen würden.

Der Antrieb bzw. der Vortrieb des Schiffes ist für einen Windantrieb optimiert, so dass es sich bei dem Schiff der vorliegenden Erfindung um ein Segelschiff handelt.

Die Magnus-Rotoren werden vorzugsweise im Bereich der Eckpunkte der Laderäume angeordnet, so dass sie eine rechteckige Fläche aufspannen. Es sei jedoch darauf hingewiesen, dass ebenfalls eine andere Anordnung möglich ist. Die Anordnung der Magnus-Rotoren beruht auf einem Gedanken, dass eine bestimmte Rotorfläche erforderlich ist, um die gewünschte Antriebsleistung durch die Magnus-Rotoren zu erzielen. Durch eine Aufteilung dieser benötigten Oberfläche auf insgesamt vier Magnus-Rotoren werden die Abmessungen der einzelnen Magnus-Rotoren verringert. Durch diese Anordnung der Magnus-Rotoren bleibt eine größtmögliche durchgehende Fläche frei, welche insbesondere zum Be- und Entladen des Schiffes dient sowie eine Aufnahme einer Deckenlast in Form von mehreren Containerladungen ermöglicht.

Die Magnus-Rotoren sind dabei derart ausgelegt, dass durch ihren Betrieb die gleiche Leistung (etwa 6000 kW) erreicht wird wie durch den Propeller. Bei ausreichendem Wind kann somit der Antrieb des Schiffes vollständig durch die Magnus-Rotoren 10 erfolgen. Dies wird beispielsweise bei einer Windgeschwindigkeit von 12 bis 14 Metern pro Sekunde erreicht, so dass der Propeller bzw. der Hauptantrieb abgeschaltet werden kann, da er für den Vortrieb des Schiffs nicht mehr benötigt wird.

Die Magnus-Rotoren und der Hauptantrieb sind damit derart ausgelegt, dass der Hauptantrieb bei nicht ausreichendem Wind lediglich die Differenz der Leistung erbringen muss, die von den Magnus-Rotoren nicht geliefert werden kann. Eine Steuerung des Antriebs erfolgt somit derart, dass die Magnus-Rotoren 10 die maximale Leistung oder annähernd die maximale Leistung erzeugen. Eine Steigerung der Leistung der Magnus-Rotoren führt somit unmittelbar zu einer Einsparung an Brennstoff, da für den elektrischen Antrieb durch den Hauptantrieb keine zusätzliche Energie erzeugt werden muss. Die Einsparung an Brennstoff ergibt sich somit, ohne dass eine Anpassung zwischen einem durch eine Verbrennungsmaschine angetriebenen Propeller bzw. Hauptantrieb sowie der Steuerung der Magnus-Rotoren benötigt wird.

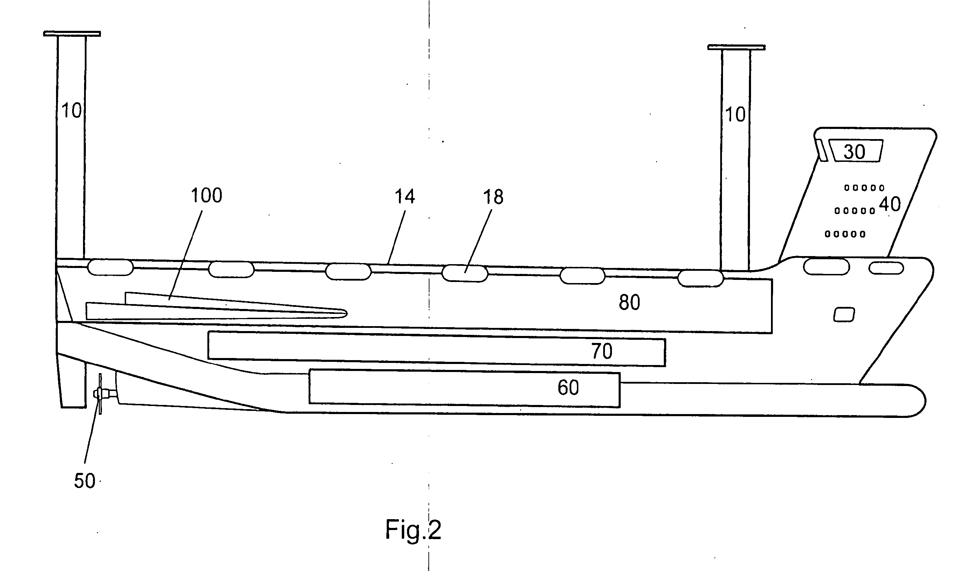

Fig. 2 zeigt eine Seitenansicht und eine Teilschnittansicht des Schiffes von Fig. 1. Hierbei sind ebenfalls die Magnus-Rotoren 10, das Deckshaus 40 und die Brücke 30 gezeigt. Das Wetterdeck 14 weist Lichtöffnungen 18 auf, die zum Schutz vor Witterungseinflüssen bzw. Seewasser mit transparentem Material abgedeckt sein können. Die Form der Abdeckungen entspricht dabei derjenigen der übrigen Rumpfteile. Ferner sind die drei Ladedecks, d. h. ein Unterraum 60, ein erstes Zwischendeck 70 und ein zweites Zwischendeck 80 gezeigt.

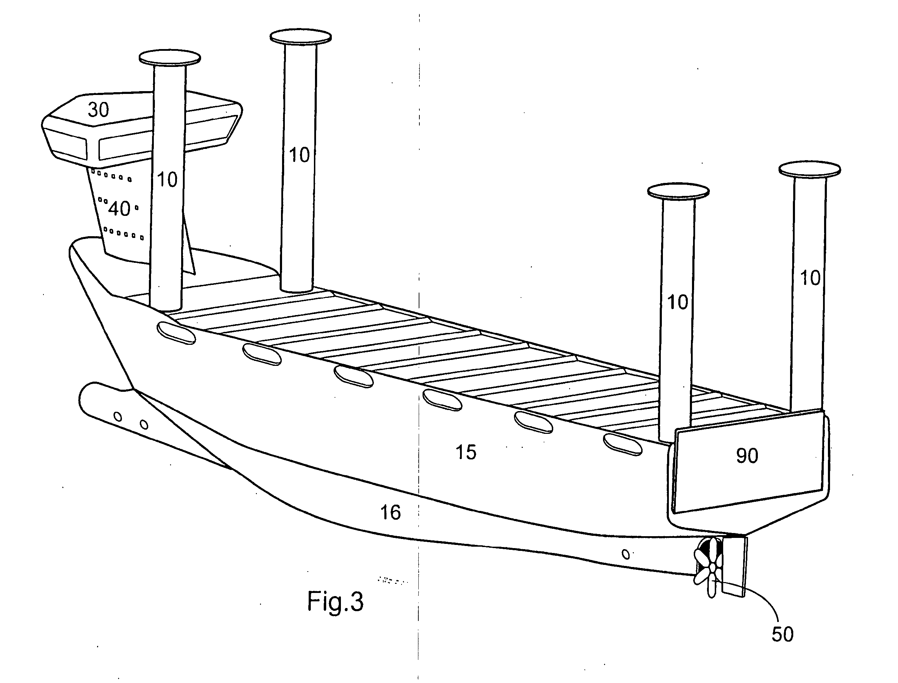

Fig. 3 zeigt eine weitere schematische Ansicht des Schiffes von Fig. 1. Hierbei ist insbesondere das Heck des Schiffes gezeigt. Das Schiff weist wiederum einen oberen Bereich 15 und einen unteren Bereich 16, ein Deckshaus 40 und eine Brücke 30 sowie vier Magnus-Rotoren 10 auf. Ferner weist das Schiff eine vorzugsweise hydraulisch angetriebene Heckpforte 90 auf, über welche rollendes Gut in das zweite Zwischendeck 70b be- bzw. entladen werden kann. Die Heckpforte 90 kann dabei beispielsweise eine Höhe von 7 Metern sowie eine Breite von 15 Metern aufweisen. Zusätzlich dazu kann ein Lift eingebaut werden, damit eine rollende Beladung des ersten Zwischendecks 80 sowie des Unterraumes 16 möglich ist. Der Unterraum 16 befindet sich dabei unterhalb der Konstruktions-Wasserlinie.

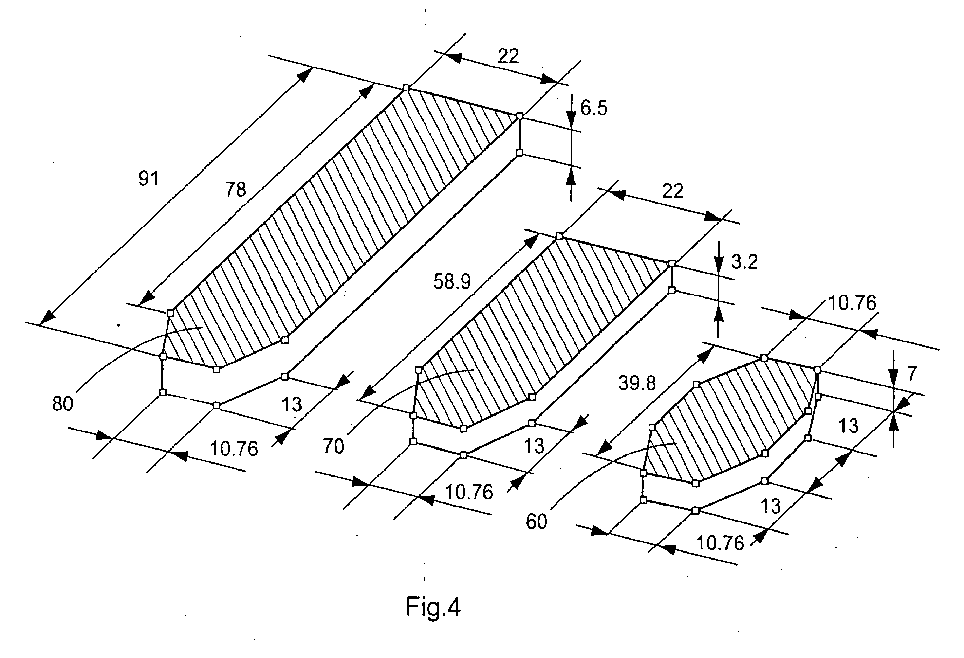

Fig. 4 zeigt eine schematische Ansicht der verschiedenen Laderäume, nämlich des Unterraumes 60, des ersten Zwischendeckes 70 sowie des zweiten Zwischendecks 80.

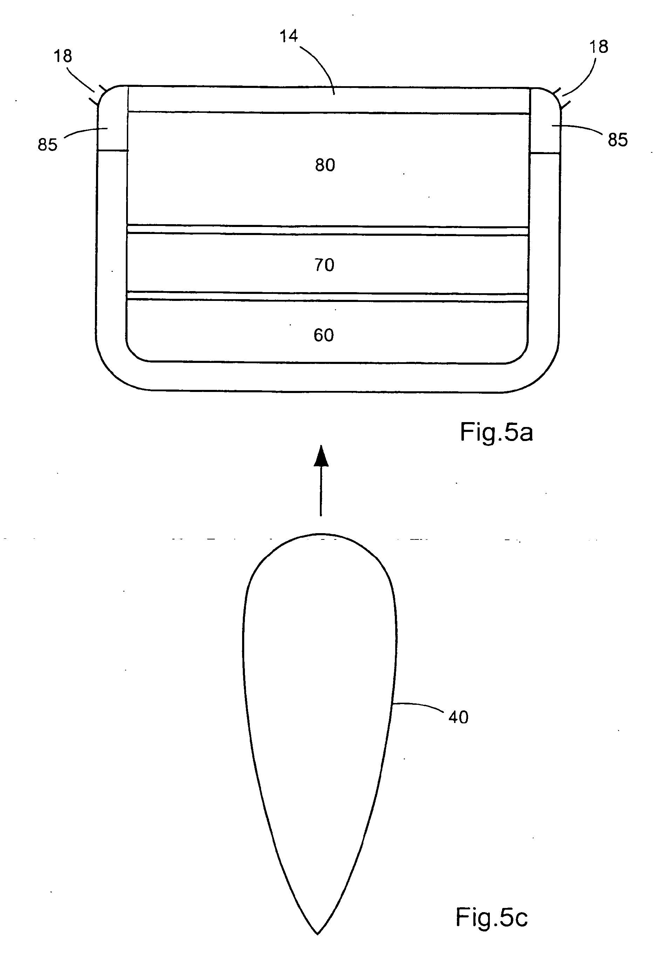

Fig. 5a zeigt eine Schnittansicht der Laderäume. Hierbei ist der Unterraum 60 als unterster Laderaum angeordnet. Oberhalb des Unterraumes 60 ist das erste Zwischendeck 70 sowie das zweite Zwischendeck 80 angeordnet. Das zweite Zwischendeck 80 wird durch das Oberdeck 14 abgeschlossen. An den Seiten des Oberdecks ist ein Betriebsgang bzw. Hauptdeck 85 vorgesehen, welcher vorzugsweise Öffnungen 18 aufweist. Diese Öffnungen können optional verschließbar ausgestaltet sein.

Der Lukensüll der Ladeluken sowie der Betriebsgang 85 werden auf der ganzen Länge mit einer Abdeckung (dem Wetterdeck) versehen, so dass eine Fläche mit einer Oberfläche gebildet wird, welche an die Schiffsaußenhaut angepasst ist.

Wie insbesondere in Fig. 5a gezeigt, weist das Schiff drei übereinander angeordnete Laderäume auf, welche insbesondere glatte Seitenwände ohne einen Unterstau aufweisen. Dies wird durch eine Doppelhüllenkonstruktion des Rumpfes erreicht. Die Abdeckung des Unterraumes 60 sowie des ersten Zwischendecks 70 erfolgt vorzugsweise mit einzelnen Pontondeckeln, welche beispielsweise in Traversen eingehängt werden können, welche herausklappbar in verschiedenen Höhen in der Seitentankwand angeordnet sind. Diese Pontons weisen vorzugsweise ein Tragfähigkeit von sechs bis zehn Tonnen pro Quadratmeter auf. Die Pontons können beispielsweise durch einen Deckskran bewegt werden. Falls die Pontons nicht benötigt werden, können sie im vorderen Laderaumbereich übereinander verstaut werden.

Die oben beschriebenen Pontons dienen zur Unterteilung des Innenraums der Laderäume, wobei die Pontons in unterschiedliche Laderäume in einer variablen Höhe eingehängt werden können, so dass die Höhe der einzelnen Laderäume variabel ausgestaltet werden kann. Somit kann der Laderaum in seinem Verlauf bzw. entlang seiner Länge unterschiedliche Höhen aufweisen, so dass in einem Abschnitt des Laderaums mit größerer Höhe eine entsprechende Fracht untergebracht werden kann, während in einem anderen Abschnitt des Laderaums eine geringere Höhe vorhanden ist, so dass für den darüber liegenden Laderaum entsprechend mehr Höhe zur Verfügung steht. Somit kann eine überaus flexible Aufteilung des Ladebereiches in den verschiedenen Laderäumen erreicht werden.

Zwischen der Außenwand des Schiffes und der Wand der Laderäume sind Ballasttanks vorgesehen, welche beispielsweise mit Ballastwasser gefüllt sein können, um dem Schiff die benötigte Stabilität zu geben. Oberhalb des Ballasttankes ist das Hauptdeck 85 angeordnet, d. h. das Hauptdeck 85 verläuft außerhalb des Laderaumes neben dem Lukensüll 86.

Durch die Ausgestaltung der Abdeckung des Lukensülls wird die Rumpfoberseite des Schiffes strömungsgünstig ausgestaltet, da keinerlei Aufbauten vorhanden sind, welche Verwirbelungen der Luftströmung hervorrufen könnten. Dies ist ebenfalls der Grund für die Abdeckung des Hauptdecks bis zur Außenhaut des Schiffes, so dass sich ein strömungsgünstig verkleideter und wettergeschützter Gang auf dem Hauptdeck 85 ergibt.

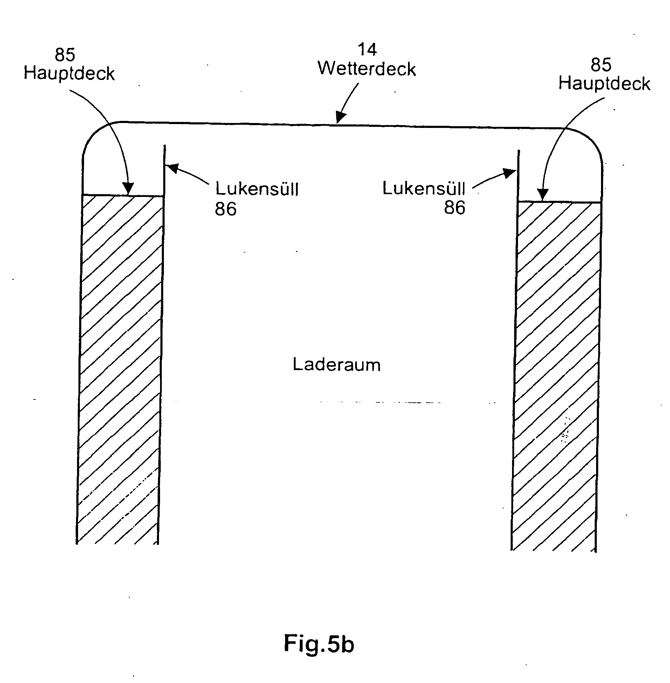

Fig. 5b zeigt eine weitere Schnittansicht des Schiffes von Fig. 1. Hier ist ein Ausschnitt der Schnittansicht von Fig. 5a gezeigt. Das Wetterdeck 14 erstreckt sich über das Hauptdeck 85 und schließt an die Außenhaut des Schiffes an, so dass eine aerodynamisch günstige Formgebung erreicht wird. Das Hauptdeck 85 weist ein Lukensüll 86 auf der dem Laderaum zugewandten Seite auf. Durch die Ausgestaltung des Wetterdecks bzw. der Abdeckung des Hauptdecks, welche an die Außenhaut des Schiffes anschließt, wird abgesehen von der aerodynamisch günstigen Form auch das Hauptdeck 85 vor ungünstigen Wetterbedingungen geschützt.

Das Schiff weist ferner eine Wetterdecksluke auf. Diese Wetterdecksluke hat beispielsweise eine Größe von 70 x 22 m und wird mit einem hydraulisch angetriebenen Faltdeckelsystem (wie beispielsweise ein MacGregor-System oder dergleichen) abgedeckt. Die Tragfähigkeit der Wetterdecksluken beträgt vorzugsweise 3 bis 5 Tonnen pro Quadratmeter.

Die Wetterdecksluke wird von hinten nach vorne verschlossen, so dass sich die senkrecht stehenden Lukendeckel zwischen den Magnus-Rotoren auf dem Achterschiff bei geöffneter Luke befinden. Vorzugsweise ist eine Vielzahl von Laschaugen für den Transport von Komponenten einer Windenergieanlage vorgesehen. Die Materialien für die Tankdeckel des Unterraumes 60 stellen vorzugsweise keine brennbaren Materialien dar, damit Laschaugen im Unterraum 60 angeschweißt werden können.

Die Tragfähigkeit der Tankdecke beträgt vorzugsweise 17 bis 20 Tonnen pro Quadratmeter. Alle Laderäume einschließlich der Wetterdecksluken sind vorzugsweise ebenfalls für den Transport von Standardseecontainern ausgestaltet. Vorzugsweise können fünf Lagen von Standardseecontainern unter Deck sowie fünf Lagen an Deck vorgesehen werden, so dass eine maximale Kapazität von 824 TEU vorgesehen sind.

Fig. 5c zeigt eine Schnittansicht des Deckshauses 40 des Schiffs von Fig. 1. Der in Fig. 5c gezeigte Querschnitt stellt lediglich ein Beispiel dar. Hierbei ist das Deckshaus an seinem einen Ende rundlich ausgestaltet, während sich das Deckshaus nach hinten hin strömungsgünstig verjüngt.

Das Schiff weist ferner einen Bordkran (nicht gezeigt) auf, welcher vorzugsweise als ein Portalkran mit einer Tragfähigkeit von beispielsweise 75 Tonnen vorgesehen ist. Der Bordkran wird vorzugsweise auf dem Hauptdeck vorgesehen. Die Schienen für den Bordkran laufen vorzugsweise parallel zum Süll der Ladeluken.

Die Höhe des Portalkrans, welche sich über das Hauptdeck erstreckt, soll vorzugsweise derart ausgestaltet sein, dass der Kran für einen Umschlag von Komponenten von Windenergieanlagen ausgestaltet ist und lediglich sekundär zum Umschlag von Container verwendet wird. Da der Kran auf der gesamten Lukenlänge und auf der gesamten Schiffsbreite verfahrbar ist, kann jede Position innerhalb der Laderäume erreicht werden. Der Ausleger des Krans ist vorzugsweise in der Höhe verstellbar, um unterschiedlich große Komponenten über den Lukensüll hieven zu können. Seine Länge beträgt daher vorzugsweise 10 Meter. Der Portalkran ist dabei derart ausgestaltet, dass er eine Parkposition im vorderen Bereich des zweiten Zwischendecks 70 aufweist. Vorzugsweise ist der Portalkran auf einer Liftplattform mit Schienen angeordnet, so dass sich das Wetterdeck darüber schließen kann.

Das Schiff gemäß dem ersten Ausführungsbeispiel weist vorzugsweise einen dieselelektrischen Hauptantrieb auf. Vorzugsweise sieben Dieselaggregate mit jeweils 1000 kW elektrischer Leistung versorgen zentral das gesamte Bordnetz mit den Hauptfahrmotoren und den Antriebsmotoren für die Magnus-Rotoren sowie die Querstrahlruder. Hierbei erfolgt ein Zu- und Wegschalten der Dieselaggregate automatisch entsprechend den Anforderungen aus dem Bordnetz. Der Maschinenraum für die Dieselaggregate befindet sich vorzugsweise im Vorschiff unterhalb der Decksaufbauten. Der Montageraum weist eine Montageluke zum Hauptdeck sowie entsprechende Vorrichtungen auf, welche einen teilweisen bzw. Komplettaustausch von Aggregaten in einem Hafen erlauben. Die Kraftstofftanks befinden sich vorzugsweise im Vorschiff hinter der doppelwandigen Außenhaut des Schiffes. Der Hauptantrieb 50 wird hierbei durch einen Elektromotor angetrieben, welcher die elektrische Leistung wiederum durch einen dieselangetriebenen Generator erhält. Der elektrische Hauptfahrmotor wirkt dabei direkt auf einen Verstellpropeller, welcher einen maximalen Pitchwinkel von 90° aufweist. Die Schaufeln können somit in Fahnenstellung gebracht werden. Der Hauptfahrmotor befindet sich mit allen Hilfsaggregaten im Hauptmaschinenraum hinter dem untersten Laderaum. Die elektrischen Versorgungsleitungen zwischen dem Dieselaggregatraum und dem Hauptmaschinenraum werden redundant sowohl auf der Backbord- als auch auf der Steuerbordseite ausgeführt. Zusätzlich dazu kann das Schiff über einen Notdieselraum im Achterschiffbereich verfügen. Das Ruder des Schiffes wird vorzugsweise durch ein hydraulisch angetriebenes Schweberuder ausgebildet, um eine gute Manövrierbarkeit sicher zu stellen.

Der Propellerantrieb ist grundsätzlich zu den vier Magnus-Rotoren 10 vorgesehen. Der Antrieb sowie die Steuerung der vier Magnus-Rotoren erfolgt dabei vollkommen automatisch und jeweils unabhängig für jeden der Magnus-Rotoren, so dass die Magnus-Rotoren auch unterschiedlich, d. h. in Drehrichtung und Drehzahl gesteuert werden können.

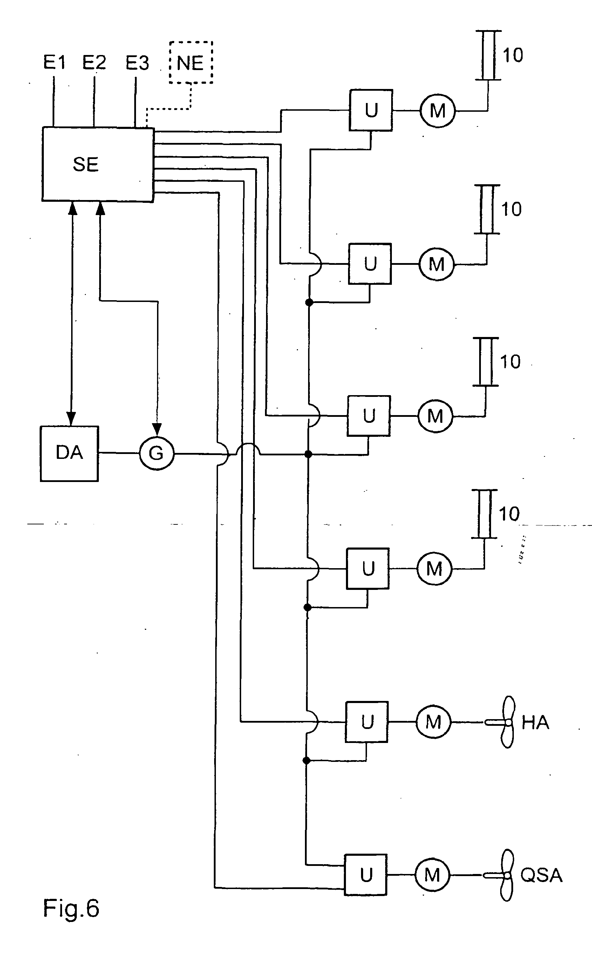

Fig. 6 zeigt ein Blockschaltbild der Steuerung des Schiffes gemäß dem ersten Ausführungsbeispiel von Fig. 1. Jeder der vier Magnus-Rotoren 10 weist einen eigenen Motor M sowie einen separaten Umrichter U auf. Die Umrichter U sind mit einer zentralen Steuereinheit SE verbunden. Ein Dieselantrieb DA ist mit einem Generator G verbunden, um elektrische Energie zu erzeugen. Die jeweiligen Umrichter U sind mit dem Generator G verbunden. Ferner ist ein Hauptantrieb HA gezeigt, welcher ebenfalls mit einem Elektromotor M verbunden ist, welcher wiederum mit einem separaten Frequenzumrichter U sowohl mit der Steuereinheit SE als auch mit dem Generator G verbunden ist. Die vier Magnus-Rotoren 10 können hierbei sowohl einzeln als auch unabhängig voneinander gesteuert werden. Die Steuerung der Magnusrotoren sowie des Hauptantriebes erfolgt durch die Steuereinheit SE, welche aus den aktuellen Windmessungen (Windgeschwindigkeit, Windrichtung) E1, E2 sowie anhand der Informationen zu Soll- und Ist-Fahrtgeschwindigkeit E3 (sowie optional anhand von Navigationsinformationen von einer Navigationseinheit NE) die entsprechende Drehzahl und Drehrichtung für den einzelnen Magnus-Rotor 10 sowie des Hauptantriebes bestimmt, um eine maximale Vortriebskraft zu erreichen. Die Steuereinheit SE regelt in Abhängigkeit der Schubkraft der vier Magnus-Rotoren sowie der aktuellen Schiffsgeschwindigkeit und dem Sollwert der Geschwindigkeit die Hauptantriebsanlage stufenlos herunter, soweit dies erforderlich ist. So kann die Windenergieleistung unmittelbar und automatisch in eine Kraftstoffersparnis umgesetzt werden. Durch die unabhängige Steuerung der Magnus-Rotoren 10 kann das Schiff auch ohne Hauptantrieb gesteuert werden. Insbesondere kann durch entsprechende Steuerung der jeweiligen Magnus-Rotoren 10 eine Stabilisierung des Schiffs bei einem starken Seegang erreicht werden.

Ferner können ein oder mehrere Querstrahlruder QSA vorgesehen werden, um die Manövrierbarkeit des Schiffes zu verbessern. Hierbei können ein Querstrahlruder hinten sowie ein bis zwei Querstrahlruder vorne am Schiff vorgesehen sein. Jedem Querstrahlruder QSA ist ein Motor zum Antrieb sowie ein Umrichter zugeordnet. Der Umrichter U ist wiederum mit der zentralen Steuereinheit SE und dem Generator G verbunden. Somit können die Querstrahlruder (lediglich eins ist in der Fig. 6 gezeigt) ebenfalls zum Steuern des Schiffes verwendet werden, da sie mit der zentralen Steuereinheit (über den Umrichter) verbunden sind. Die Querstrahlruder QSA können jeweils einzeln hinsichtlich ihrer Drehzahl und Drehrichtung von der zentralen Steuereinheit SE angesteuert werden. Die Steuerung kann dabei wie oben beschrieben erfolgen.

Ein Verstellpropeller ist üblicherweise in einem Bereich von -20° bis +20° verstellbar. Bei einer Einstellung von +20° wird ein maximaler Vortrieb erzeugt, während eine Einstellung des Verstellpropellers auf -20° eine Rückwärtsfahrt bewirkt.

Vorzugsweise wird der Verstellbereich des Verstellpropellers von -20° bis +100° ausgestaltet. Somit kann der Propeller bei etwa +90° in eine Fahnenstellung gedreht werden, wodurch der Widerstand des Propellers bei reinem Magnusantrieb des Schiffes minimal ist. Dies ist insbesondere dahingehend vorteilhaft, dass das Schiff strömungsgünstiger ausgestaltet wird, und es wird eine frühere Abschaltung des Propellers ermöglicht, da der Magnusantrieb früher die für die Vorwärtsfahrt des Schiffes erforderliche Leistung erbringen kann, da der Widerstand der Propellerschaufeln nicht mehr überwunden werden muss.

Die günstigen Werte für den Magnusantrieb werden beispielsweise bei Anströmungen in einem Bereich von 30° bis etwa 130°, bevorzugt von 45° bis 130° bezogen auf den Schiffskurs erreicht. Da der Antrieb des Schiffes weitmöglichst durch die Magnus-Rotoren erfolgen soll, ist eine Fahrt gegen den Wind nur begrenzt möglich, so dass bei der Navigation eine gewisse Abweichung vom idealen Kurs möglich ist, um dadurch eine bessere Ausnutzung des Antriebs durch die Magnus-Rotoren zu ermöglichen. Somit haben sowohl die Windrichtung als auch die Windgeschwindigkeit Einfluss auf die Navigation bzw. die Steuerung des Schiffes.

In diesem Zusammenhang sei auf die wahre Windrichtung und die wahre Windgeschwindigkeit hingewiesen, welche sich aus den meteorologischen Daten ergeben, die durch die Fahrt des Schiffes überlagert werden. Vektorielle Addition der meteorologischen Windrichtung und Windgeschwindigkeit sowie des Kurses und der Fahrtgeschwindigkeit des Schiffes führt zu dem sogenannten wahren Wind, der durch die wahre Windrichtung und die wahre Windgeschwindigkeit beschrieben wird.

Durch die Anordnung von vier Magnus-Rotoren 10 (zwei vorne und 2 hinten auf dem Schiff) sowie durch eine entsprechende Steuerung kann die Manövrierbarkeit verbessert werden.

Die Magnus-Rotoren 10 weisen vorzugsweise eine Gesamthöhe von 27 Metern über dem Hauptdeck und einen Durchmesser von 3,5 Metern auf. Somit ergibt sich eine maximale Durchfahrtshöhe von 40 Metern bei einem Tiefgang von 5 Metern. Andere Abmessungen sind natürlich ebenfalls möglich. Die elektrischen Motoren sowie die Umrichter der jeweiligen Magnusrotoren befinden sich unterhalb des Rotors in einem separaten Raum unter Deck. Somit sind die Umrichter und die Motoren für Wartungszwecke zugänglich.

Zusätzlich zu den oben beschriebenen Ausführungsbeispielen kann das Schiff über einen Zugdrachen verfügen, welcher mit einem Zugseil mit dem Schiff verbunden ist. Somit kann ein derartiger Zugdrachen bei geeigneten Windrichtungen ebenfalls als Hilfsantrieb verwendet werden, um weiterhin Kraftstoff zu sparen.

Die oben beschriebenen Magnus-Rotoren können eine Schnelllaufzahl von 15 und mehr, bevorzugt mehr als 20, aufweisen. Durch eine derart hohe Schnelllaufzahl kann eine signifikante Steigerung der Effizienz ermöglicht werden.

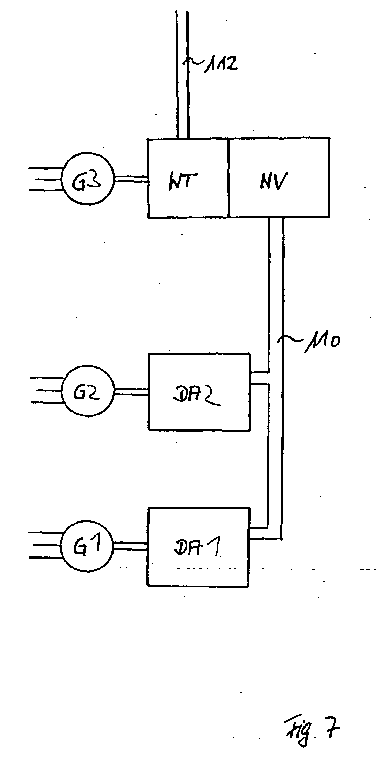

Fig. 7 zeigt eine modifizierte Ausführungsform des Erzeugungssystems für die elektrische Energie des Schiffes. Das Erzeugungssystem gemäß Fig. 7 kann in die Steuerung gemäß Fig. 6 integriert werden. Beispielhaft sind zwei Dieselantriebe bzw. Verbrennungskraftmaschinen DA mit nachgeschalteten elektrischen Generatoren G1, G2 dargestellt. Die Abgase der Dieselantriebe DA werden in einem Abgasrohr 110 abgeführt und einer Nachverbrennungseinheit NV zugeführt. In dieser Nachverbrennungseinheit NV werden die in den Dieselantrieben DA noch nicht verbrannten Bestandteile des Abgases verbrannt und über einen nachgeschalteten Wärmetauscher WT wird diese Verbrennungswärme, aber auch ein beträchtlicher Teil der Wärme des Abgases diesem entzogen und für den Antrieb eines weiteren Generators G3 verwendet, der aus dieser Wärme zusätzliche elektrische Energie erzeugt. Somit werden die Dieselantriebe DA entsprechend geringer beansprucht und deren Brennstoffverbrauch ist entsprechend geringer. Die derart nachbehandelten Abgase können anschließend über einen Schornstein 112 ausgestoßen werden.

Die von den Generatoren G1 - G3 erzeugte elektrische Energie kann wie in Fig. 6 gezeigt dem Motor M des Hauptantriebs HA beispielsweise über ein elektrisches Bordnetzwerk zugeführt werden. Zusätzlich können die Umrichter U und die elektrischen Motoren M der Magnusrotoren 10 über das Bordnetzwerk mit elektrischer Energie versorgt werden. Das Bordnetzwerk kann ferner dazu verwendet werden, die elektrische Energieversorgung des Schiffes zu gewährleisten.

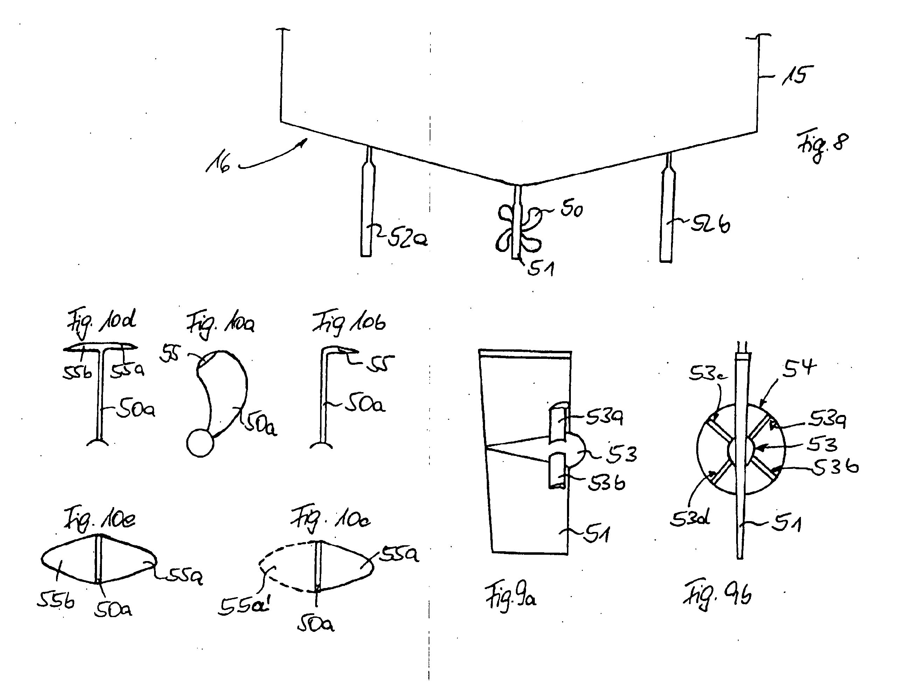

Fig. 8 zeigt eine vereinfachte Darstellung des Querschnittes des Schiffsrumpfes. Der Schiffsrumpf weist einen oberen Bereich 15 und einen unteren Bereich 16 auf. Mittschiffs ist ein Propeller 50 des konventionellen Antriebes sowie das mittlere Ruder 51 angeordnet.

An beiden Seiten des mittleren Ruders 51 befindet sich jeweils ein weiteres Ruder 52a, 52b. Diese weiteren Ruder 52a, 52b sind ein vorgegebenes Maß von dem mittleren Ruder 51 zur Backbordseite hin (Ruder 52a) und zur Steuerbordseite (Ruder 52b) versetzt angeordnet. Diese beiden zusätzlichen Ruder 52a, 52b weisen eine Fläche auf, deren Größe etwa doppelt so groß wie die des mittleren Ruder 51 ist. Diese zusätzlichen Ruder 52a, 52b dienen hierbei hauptsächlich dazu, die Segeleigenschaften des Schiffes, also die Eigenschaften bei der Fahrt mit Magnusrotor-Antrieb zu verbessern.

Fig. 9a zeigt eine Seitenansicht einer alternativen Ausführungsform des mittleren Ruders 51. In dieser alternativen Ausführungsform weist das Ruder 51 eine sogenannte Costa-Birne 53 auf. An dieser Costa-Birne 53 sind Leitschaufeln 53a, 53b angebracht, welche derart ausgebildet sind, dass sie wenigstens einen Teil der vom Propeller 50 im Wasser erzeugten Verwirbelung in eine Vortriebskraft für das Schiff umwandeln. Auf diese Weise wird die in dem Propeller 50 zugeführte Leistung effektiver in eine Vortriebskraft umgewandelt und trägt somit ebenfalls zur Einsparung von Kraftstoff bei.

Fig. 9b zeigt eine weitere Ansicht des mittleren Ruders 51 mit der Costa-Birne 53 sowie Leitschaufeln 53a, 53b, 53c, 53d. Diese Leitschaufeln 53a - 53d sind zusätzlich von einem Ring 54 umschlossen. Diese Anordnung der Costa-Birne, der Leitschaufeln und der Letztere umschließenden Ring verbessert nochmals die Umwandlung der dem Propeller (in dieser Figur nicht dargestellt, vergl. Fig. 8, Bezugszeichen 50) zugeführten Leistung in Vortriebskraft für das Schiff. Das Ruder 51 kann auch als sogenanntes "Twisted-Rudder" ausgeführt sein.

Fig. 10a zeigt stark vereinfacht eine der Propellerschaufeln 50a mit einem daran angebrachten Randbogen 55 in der Ansicht von hinten. In Fig. 10b ist diese Propellerschaufel 50a in einer Seitenansicht dargestellt und der zu einer Seite abknickende Randbogen 55 (in der Figur nach rechts) ist gut erkennbar.

In Fig. 10c ist eine Draufsicht auf diese Propellerschaufel 50a dargestellt und der Randbogen 55a ist in einer elliptischen Form gut zu erkennen. Diese elliptische Form führt zu einem besonders strömungsgünstigen Verhalten und zu einem allmählichen Ablösen der Strömung entlang der elliptischen Form, so dass sich an der Spitze des Randbogens 55a nur noch ein sehr geringer Teil der Strömung vom Randbogen lösen muss. Dadurch ist die Strömungsablösung mit wesentlich weniger Verlusten verbunden und auch dies trägt zu verbessertem Vortriebsverhalten und damit zu besserer Kraftstoffausnutzung bei. Im linken Teil dieser Figur ist ein elliptischer Randbogen 55a' gestrichelt dargestellt. Dies deutet darauf hin, dass der Randbogen je nach Erfordernis natürlich nicht nur zu der in Fig. 10b dargestellten Seite hin aus der Ebene der Propellerschaufel 50a abgeknickt sein kann sondern auch zu der gegenüberliegenden Seite.

Die Fig, 10d und 10e zeigen eine ähnliche, wenn auch alternative Ausführungsform. In Fig. 10d ist gut zu erkennen, dass hier zwei Randbögen 55a, 55b vorgesehen sind, die zu einander gegenüberliegenden Seiten aus der Ebene der Propellerschaufel 50a abgewinkelt sind im Gegensatz zu der Darstellung in den Fig. 10b, 10c, in denen nur ein Randbogen dargestellt war, sind hier zwei Randbögen vorgesehen. Dadurch werden die Verluste durch die Ablösung der Strömung von den Propellerschaufeln 50a nochmals verringert und somit noch mehr Kraft für den Vortrieb des Schiffes zur Verfügung gestellt.

## Patentansprüche

1. Schiff, mit
einer Vieizahl von Magnus-Rotoren (10), **gekennzeichnet durch**
einen diesel-elektrischen Antrieb (DA) mit mehreren Dieselaggregaten,
einen elektrischen Motor zum Antreiben eines Hauptantriebes (HA) des Schiffes,
wobei jedem der Vielzahl von Magnus-Rotoren ein individuell ansteuerbarer elektrischer Motor (M) zum Drehen des Magnus-Rotors (10) zugeordnet ist, wobei jedem elektrischen Motor (M) ein Umrichter (U) zugeordnet ist, um die Drehzahl und/oder die Drehrichtung des elektrischen Motors (M) zu steuern,
wobei der diesel-elektrische Antrieb zentral das gesamte Bordnetz mit dem Hauptantrieb (HA) und den Antriebsmotoren der Magnus-Rotoren sowie die Querstrahlruder versorgt,
wobei die jeweiligen Dieselaggregate automatisch entsprechend den Anforderungen aus dem Bordnetz zu- oder weggeschaltet werden.

2. Schiff nach Anspruch 1, ferner mit
einer mit den Umrichtern (U) verbundenen zentralen Steuereinheit (SE) zum Steuern der einzelnen Umrichtern (U), um die Drehzahl und/oder die Drehrichtung der Magnus-Rotoren (10) jeweils unabhängig von den andren Magnus-Rotoren (10) zu steuern.

3. Schiff nach Anspruch 2, wobei
die Drehzahl und/oder die Drehrichtung der Magnus-Rotoren (10) in Abhängigkeit der Windgeschwindigkeit, der Windrichtung, eines vorgebbaren Kurses und/oder von Navigationsinformationen gesteuert wird.

4. Schiff nach einem der vorherigen Ansprüche,
wobei dem elektrischen Motor des Hauptantriebes (HA) ein Umrichter (U) zum Steuern des Motors zugeordnet ist.

5. Schiff nach Anspruch 3 oder 4, wobei die Magnus-Rotoren (10) derart von der zentralen Steuereinheit (SE) gesteuert werden, dass ein maximaler Vortrieb erhalten wird, wobei die Differenz aus dem gewünschten Vortrieb und dem durch die Rotation der Magnus-Rotoren (10) erhaltenen Vortrieb durch den Hauptantrieb (HA) erbracht wird.

6. Schiff nach einem der vorherigen Ansprüche, ferner mit
einem Wetterdeck, welches im Wesentlichen abgerundete Ecken und abgerundete Anbauteile aufweist, um eine aerodynamische Form zu implementieren.

7. Schiff nach einem der vorherigen Ansprüche, mit
einem Betriebsgang (85) im Hauptdeck, wobei der Betriebsgang (85) zumindest abschnittsweise derart mit einer Abdeckung versehen ist, dass die Abdeckung an eine Außenhaut des Schiffs und/oder eine Oberseite des Schiffs anschließt.

8. Schiff nach einem der vorherigen Ansprüche, mit
einem Deckshaus (40), dessen Profil aerodynamisch derart ausgebildet ist, dass es zum Vortrieb des Schiffs beiträgt.

9. Schiff nach einem der vorherigen Ansprüche, ferner mit
mehreren Laderäumen, nämlich einem Unterraum (60), einem ersten Zwischendeck (70) und einem zweiten Zwischendeck (80), wobei eine Unterteilung der Laderäume (60, 70, 80) durch ein Anbringen von Pontondeckeln erfolgt.

10. Schiff nach einem der vorherigen Ansprüche, mit
einer verschließbaren Wetterdecksluke (14), insbesondere mit einem hydraulisch angetriebene Faltdeckelsystem, welches sich im Wesentlichen über die gesamte Länge des Laderaumes (80) erstreckt.

11. Schiff nach einem der vorherigen Ansprüche, mit
einer verschließbaren Heckpforte (90), welche vorzugsweise hydraulisch angetrieben wird.

12. Schiff nach Anspruch 11, mit
einem im Bereich der Heckpforte (90) angeordneten Aufzug, über welchem der Laderaum erreichbar ist.

13. Schiff nach einem der vorherigen Ansprüche, ferner mit
einem Hauptdeck mit Schienen, und
einem Bordkran, insbesondere einem Portalkran, welcher auf den Schienen verfahrbar ist.

14. Schiff nach Anspruch 13, wobei
der Bordkran auf einer Aufzugsplattform derart angeordnet ist, dass der Bordkran in eine Ebene unterhalb des Wetterdecks derart verfahrbar ist, dass sich das Wetterdeck über den Bordkran schließen kann.

15. Schiff nach einem der vorherigen Ansprüche,
wobei der diesel-elektrische Antrieb mindestens eine Verbrennungskraftmaschine (DA) aufweist, welche mit einem elektrischen Generator (G1, G2) gekoppelt ist, um elektrische Energie zu erzeugen.

16. Schiff nach Anspruch 15, mit
einer Nachverbrennungseinheit (NV) zum Nachverbrennen der Abgase der Verbrennungskraftmaschine (DA),
einem Wärmetauscher (WT) zum Entziehen der Verbrennungswärme der Nachverbrennungseinheit (NV) und/oder der Wärme der Abgase der Verbrennungskraftmaschine (DA), und
einem Generator (G3), welcher mit dem Wärmetauscher (WT) gekoppelt ist und welcher durch die von dem Wärmetauscher (WT) abgegebene Wärme angetrieben wird.

17. Schiff, insbesondere nach einem der vorherigen Ansprüche, mit
einem durch den Hauptantrieb (HA) angetriebenen Propeller (50),
einem Ruder (51), welches eine Costa-Birne (53) aufweist,
wobei mindestens zwei Leitschaufeln (53a, 53b) derart an der Costa-Birne (53) angeordnet sind, dass ein Teil der von dem Propeller (50) erzeugten Verwirbelung in eine Vortriebskraft umgewandelt wird.

18. Schiff nach Anspruch 17, ferner mit einem Ring (54), welcher die Leitschaufeln (53a - 53d) umschließt.

19. Schiff nach einem der vorherigen Ansprüche, mit
einem Propeller (50) mit Schaufeln (50a),
wobei die Schaufeln (50a) des Propellers (50) jeweils einen vorzugsweise abgeknickten Randbogen (55) aufweisen.

20. Schiff nach Anspruch 19, wobei die Schaufeln (50a) des Propellers (50) einen elliptischen Randbogen (55a) aufweisen.

21. Schiff nach einem der Ansprüche 19 bis 20, wobei die Schaufeln (50a) des Propellers (50) zwei Randbögen (55a, 55b) aufweisen, welche an gegenüberliegenden Seiten der Schaufel (50a) abgewinkelt sind.

22. Schiff nach einem der vorstehenden Ansprüche, ferner mit
einem ersten mittleren Ruder (51) und mindestens zwei zweiten Rudern (52a, 52b), welche jeweils ein vorgegebenes Maß von dem ersten mittleren Ruder (51) versetzt angeordnet sind, wobei die beiden zweiten Ruder (52a, 52b) eine Größe aufweisen, welche doppelt so groß wie die Größe des mittleren Ruders (51) ist.

## Claims

1. A ship, comprising
a plurality of Magnus rotors (10), **characterised by**
a diesel-electric drive (DA) comprising a plurality of diesel generator sets,
an electric motor for driving a main drive (HA) of the ship,
there being associated with each of the plurality of Magnus rotorsan individually actuable electric motor (M) for rotating the Magnus rotor (10), therebeing associated with each electric motor (M) a converter (U) in order to control the rotary speed and/or the rotary direction of the electric motor (M),
the diesel-electric drive centrally supplying the entire on-board electrical system with the main drive (HA) and the drive motors of the Magnus rotors and also the transverse thrusters,
the respective diesel generator sets being automatically connected to or disconnected from the on-board electrical system according to requirements.

2. A ship according to claim 1, further comprising
a central control unit (SE), connected to the converters (U), for controlling the individual converters (U) in order to control the rotary speed and/or the rotary direction of the Magnus rotors (10) each independently of the other Magnus rotors (10).

3. A ship according to claim 2, wherein
the rotary speed and/or the rotary direction of the Magnus rotors (10) is controlled in dependence on the wind speed, the wind direction, a specifiable course and/or navigational information.

4. A ship according to any one of the preceding claims,
wherein there is associated with the electric motor of the main drive (HA) a converter (U) for controlling the motor.

5. A ship according to claim 3 or claim 4, wherein the Magnus rotors (10) are controlled by the central control unit (SE) in such a way that a maximum propulsion is obtained, the difference between the desired propulsion and the propulsion obtained through the rotation of the Magnus rotors (10) being provided by the main drive (HA).

6. A ship according to any one of the preceding claims, further comprising
a weather deck which has substantially rounded corners and rounded mounted parts in order to implement an aerodynamic shape.

7. A ship according to any one of the preceding claims, comprising
a service gangway (85) in the main deck, the service gangway (85) being provided at least in portions with a cover in such a way that the cover adjoins an outer skin of the ship and/or a top side of the ship.

8. A ship according to any one of the preceding claims, comprising
a deckhouse (40) the profile of which is of an aerodynamic configuration such that it contributes to the propulsion of the ship.

9. A ship according to any one of the preceding claims, further comprising
a plurality of cargo holds, namely a lower hold (60), a first tween deck (70) and a second tween deck (80), a subdivision of the cargo holds (60, 70, 80) being effected by fitting pontoon covers.

10. A ship according to any one of the preceding claims, comprising
a closable weather deck hatch (14), especially with a hydraulically driven folding cover system which extends substantially over the entire length of the cargo hold (80).

11. A ship according to any one of the preceding claims, comprising
a closable stern gate (90) which is preferably hydraulically driven.

12. A ship according to claim 11, comprising
a lift which is disposed in the region of the stern gate (90) and by way of which the cargo hold can be reached.

13. A ship according to any one of the preceding claims, further comprising
a main deck with rails, and
an on-board crane, especially a portal crane, which is movable on the rails.

14. A ship according to claim 13, wherein
the on-board crane is disposed on a lift platform in such a way that the on-board crane is movable into a plane below the weather deck in such a way that the weather deck is able to close over the on-board crane.

15. A ship according to any one of the preceding claims,
wherein the diesel-electric drive has at least one internal combustion engine (DA) which is coupled to an electric generator (G1, G2) in order to generate electrical energy.

16. A ship according to claim 15, comprising
a post-combustion unit (NV) for post-combustion of the exhaust gases of the internal combustion engine (DA),
a heat exchanger (WT) for extracting the combustion heat of the post-combustion unit (NV) and/or the heat of the exhaust gases of the internal combustion engine (DA), and
a generator (G3) which is coupled to the heat exchanger (WT) and which is driven by the heat delivered by the heat exchanger (WT).

17. A ship, especially according to any one of the preceding claims, comprising
a propeller (50) driven by the main drive (HA),
a rudder (51) which has a Costa bulb (53),
at least two guide vanes (53a, 53b) being disposed on the Costa bulb (53) in such a way some of the turbulence generated by the propeller (50) is converted into a propulsive force.

18. A ship according to claim 17, further comprising a ring (54) which encloses the guide vanes (53a - 53d).

19. A ship according to any one of the preceding claims, comprising
a propeller (50) having blades (50a),
the blades (50a) of the propeller (50) each having a preferably bent tip (55).

20. A ship according to claim 19, wherein the blades (50a) of the propeller (50) have an elliptical tip (55a).

21. A ship according to either of claims 19 and 20, wherein the blades (50a) of the propeller (50) have two tips (55a, 55b) which are angled to opposite sides of the blade (50a).

22. A ship according to any one of the preceding claims, further comprising
a first central rudder (51) and at least two second rudders (52a, 52b) which are each disposed offset from the first central rudder (51) by a predetermined extent, the two second rudders (52a, 52b) being of a size which is twice as large as the size of the central rudder (51).

## Revendications

1. Navire comportant
une pluralité de rotors à effet magnus (10), **caractérisé par**
un entraînement diesel-électrique (DA) doté de plusieurs groupes diesel-électrogènes,
un moteur électrique servant à entraîner un entraînement principal (HA) du navire,
sachant qu'un moteur (M) électrique pouvant être commandé individuellement, servant à entraîner en rotation le rotor à effet magnus (10) est associé à chacun des rotors à effet magnus de la pluralité de rotors à effet magnus, sachant qu'un convertisseur (U) est associé à chaque moteur (M) électrique afin de commander le nombre de tours et/ou la direction de rotation du moteur (M) électrique,
sachant que l'entraînement diesel-électrique alimente de manière centrale l'ensemble du réseau de bord avec l'entraînement principal (HA) et les moteurs d'entraînement des rotors à effet magnus ainsi que le gouvernail à jet transversal,
sachant que les groupes diesel-électrogènes respectifs sont mis en service ou hors service de manière automatique selon les consignes en provenance du réseau de bord.

2. Navire selon la revendication 1, comportant en outre
une unité de commande (SE) centrale reliée aux convertisseurs (U), servant à commander les divers convertisseurs (U), afin de commander le nombre de tours et/ou la direction de rotation des rotors à effet magnus (10) respectivement indépendamment des autres rotors à effet magnus (10).

3. Navire selon la revendication 2, sachant que
le nombre de tours et/ou l'orientation de rotation des rotors à effet magnus (10) sont commandés en fonction de la vitesse du vent, du sens du vent, d'un cap pouvant être prédéterminé et/ou d'informations de navigation.

4. Navire selon l'une quelconque des revendications précédentes,
sachant qu'un convertisseur (U) servant à commander le moteur est associé au moteur électrique de l'entraînement principal (HA).

5. Navire selon la revendication 3 ou 4, sachant que les rotors à effet magnus (10) sont commandés de telle manière par l'unité de commande (SE) centrale qu'une propulsion maximale est obtenue, sachant que la différence entre la propulsion souhaitée et la propulsion obtenue grâce à la rotation des rotors à effet magnus (10) est apportée par l'entraînement principal (HA).

6. Navire selon l'une quelconque des revendications précédentes, comportant en outre
un pont exposé aux intempéries, lequel présente essentiellement des coins arrondis et des pièces à rapporter arrondies afin de mettre en oeuvre une forme aérodynamique.

7. Navire selon l'une quelconque des revendications précédentes, comportant
un couloir de service (85) sur le pont principal, sachant que le couloir de service (85) est pourvu au moins par sections d'un auvent de telle manière que l'auvent se raccorde à un bordé extérieur du navire et/ou à un côté supérieur du navire.

8. Navire selon l'une quelconque des revendications précédentes, comportant
un rouf (40), dont le profilé est réalisé de manière aérodynamique de telle manière qu'il contribue à la propulsion du navire.

9. Navire selon l'une quelconque des revendications précédentes, comportant en outre
plusieurs cales, à savoir une cale inférieure (60), un premier entrepont (70) et un deuxième entrepont (80), sachant que la mise en place de toits de ponton permet de subdiviser les cales (60, 70, 80).

10. Navire selon l'une quelconque des revendications précédentes, comportant
une écoutille de pont exposé aux intempéries (14) pouvant être fermée, en particulier avec un système de toit pliant entraîné de manière hydraulique, lequel s'étend essentiellement sur toute la longueur de la cale (80).

11. Navire selon l'une quelconque des revendications précédentes, comportant
une porte arrière (90) pouvant être refermée, qui est entraînée de préférence de manière hydraulique.

12. Navire selon la revendication 11, comportant
un monte-charge disposé dans la zone de la porte arrière (90), lequel permet d'atteindre la cale.

13. Navire selon l'une quelconque des revendications précédentes, comportant en outre
un pont principal avec des rails, et
une grue de bord, en particulier une grue sur portique, qui peut être déplacée sur les rails.

14. Navire selon la revendication 13, sachant que
la grue de bord est disposée sur une plate-forme de monte-charge de telle manière que ladite grue de bord peut être déplacée dans un plan sous le pont exposé aux intempéries de telle manière que le pont exposé aux intempéries peut se fermer au-dessus de la grue de bord.

15. Navire selon l'une quelconque des revendications précédentes,
sachant que l'entraînement diesel-électrique présente au moins un moteur à combustion interne (DA), qui est couplé à un générateur (G1, G2) électrique afin de produire de l'énergie électrique.

16. Navire selon la revendication 15, comportant
une unité de postcombustion (NV) servant à la postcombustion des gaz d'échappement du moteur à combustion interne (DA),
un échangeur thermique (WT) servant à prélever la chaleur de combustion de l'unité de postcombustion (NV) et/ou la chaleur des gaz d'échappement du moteur à combustion interne (DA), et
un générateur (G3) qui est couplé à l'échangeur thermique (WT) et qui est entraîné par la chaleur émise par l'échangeur thermique (WT).

17. Navire, en particulier selon l'une quelconque des revendications précédentes, comportant une hélice (50) entraînée par l'entraînement principal (HA),
un gouvernail (51), lequel présente un bulbe Costa (53),
sachant qu'au moins deux pales directrices (53a, 53b) sont disposées sur le bulbe Costa (53) de telle manière qu'une partie du tourbillonnement généré par l'hélice (50) est convertie en une force de propulsion.

18. Navire selon la revendication 17, comportant en outre une bague (54) qui entoure les pales directrices (53a-53b).

19. Navire selon l'une quelconque des revendications précédentes, comportant
une hélice (50) dotée de pales (50a),
sachant que les pales (50a) de l'hélice (50) présentent respectivement un saumon d'extrémité (55) de préférence plié.

20. Navire selon la revendication 19, sachant que les pales (50a) de l'hélice (50) présentent un saumon d'extrémité (55a) elliptique.

21. Navire selon l'une quelconque des revendications 19 à 20, sachant que les pales (50a) de l'hélice (50) présentent deux saumons d'extrémité (55a, 55b), qui sont coudés au niveau des côtés opposés des pales (50a).

22. Navire selon l'une quelconque des revendications précédentes, comportant en outre
un premier gouvernail central (51) et au moins deux deuxièmes gouvernails (52a, 52b), lesquels sont respectivement disposés de manière décalée à une distance d'une valeur prédéfinie par rapport au premier gouvernail central (51), sachant que les deux deuxièmes gouvernails (52a, 52b) présentent une dimension qui est deux fois plus grande que la dimension du gouvernail central (51).
